(19) Europäisches Patentamt
European Patent Office
Office européen des brevets

(11) Numéro de publication : **0 379 112 B1**

# (12) FASCICULE DE BREVET EUROPEEN

(45) Date de publication du fascicule du brevet : **24.06.92 Bulletin 92/26**

(51) Int. Cl.$^5$ : **B01J 2/28**

(21) Numéro de dépôt : **90100713.8**

(22) Date de dépôt : **15.01.90**

## (54) Procédé de formation de particules granulées à partir d'une poudre.

(30) Priorité : **18.01.89 LU 87434**

(43) Date de publication de la demande : **25.07.90 Bulletin 90/30**

(45) Mention de la délivrance du brevet : **24.06.92 Bulletin 92/26**

(84) Etats contractants désignés : **BE DE DK ES FR GB GR IT LU NL**

(56) Documents cités : **DE-A- 3 716 286**

(73) Titulaire : **COMMUNAUTE EUROPEENNE DE L'ENERGIE ATOMIQUE (EURATOM)**
**Bâtiment Jean Monnet Plateau du Kirchberg**
**Boîte Postale 1907**
**L-1019 Luxembourg (LU)**

(72) Inventeur : **Brambilla, Giovanni**
**Via Sacco e Vanzetti, 25**
**I-40050 Villanova di Castenaso (BO) (IT)**
Inventeur : **Zamorani, Edmondo**
**Via Zara 7**
**Varese (IT)**

(74) Mandataire : **Weinmiller, Jürgen**
**Lennéstrasse 9 Postfach 24**
**W-8133 Feldafing (DE)**

EP 0 379 112 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention se réfère à un procédé de formation de particules granulées à partir d'une poudre, qui est insoluble dans l'eau, les dimensions des particules granulées formées étant nettement plus grandes que celles des grains de la poudre.

L'agglomeration est un processus fondamental de l'industrie chimique.

On distingue entre une compactation mécanique, une agglomeration thermique telle que le frittage, et une aggrégation chimique selon les méthodes décrites par Browning dans Chem.Eng. 71(25), 1987, page 147 ou par le document DE-37 16 286 A1.

Le but de ces processus est souvent d'obtenir des particules granulées qui peuvent être manipulées plus facilement que des poudres finement dispersées. En pratique, il peut s'agir d'engrais, qui, sous forme granulée, se prêtent mieux à une répartition sur le terrain que des poudres, de matières premières pour la fabrication d'objets en verre ou céramique, de cendres de la combustion ou de poudres et boues collectionnées par un filtre d'air.

Une application particulière concerne l'immobilisation de déchets radioactifs ou toxiques et nocives dans une matrice de ciment en forme de sphères. Ainsi, ces produits peuvent être transportés pneumatiquement ou emballés et stockés sans risque de prolifération.

Les méthodes classiques de compactation mécanique ont pour inconvénient qu'il persiste toujours une certaine quantité de poudre finement dispersée. En outre, et cela vaut pour toutes les méthodes connues d'agglomeration thermique et d'aggrégation chimique, elles ne fournissent pas des particules sphériques d'un diamètre donné, mais des particules de formes et dimensions variées. Enfin, il est souhaitable de disposer d'autres méthodes pour élargir la gamme de poudres qui peuvent être ainsi traitées.

L'invention a donc pour but de présenter un procédé de formation de particules granulées, dont la forme se rapproche d'une sphère et dont les dimensions sont peu dispersées et peuvent en outre être influencées en adaptant certains paramètres du procédé. En outre, le procédé selon l'invention doit pouvoir être mis en oeuvre avec une plus grande variété de poudres de base que les procédés connus.

Ces buts sont atteints selon l'invention par le fait que l'on mélange la poudre avec une solution aqueuse d'une cellulose choisie parmi méthyl cellulose, hydroxypropyle méthyl cellulose, hydroxybutyle méthyl cellulose étherique et qu'on fait ensuite tomber des gouttes de ce mélange dans un bain aqueux d'au moins un sel ou hydroxyde métallique ne réagissant pas avec lesdites particules.

En ce qui concerne des particularités de certaines mises en oeuvre préférées du procédé selon l'invention, référence est faite aux sous-revendications.

L'invention sera décrite ci-après plus en détail à l'aide de la figure unique, qui montre un dispositif de laboratoire pour la mise en oeuvre dudit procédé.

Le procédé comporte essentiellement les phases suivantes:

-On mélange la poudre à agglomérer avec une solution aqueuse d'un composé à base de hydrate de carbone choisi parmi la méthyl cellulose, la hydroxypropyle méthyl cellulose et la hydroxybutylméthyl cellulose. La méthyl cellulose a la structure chimique suivante:

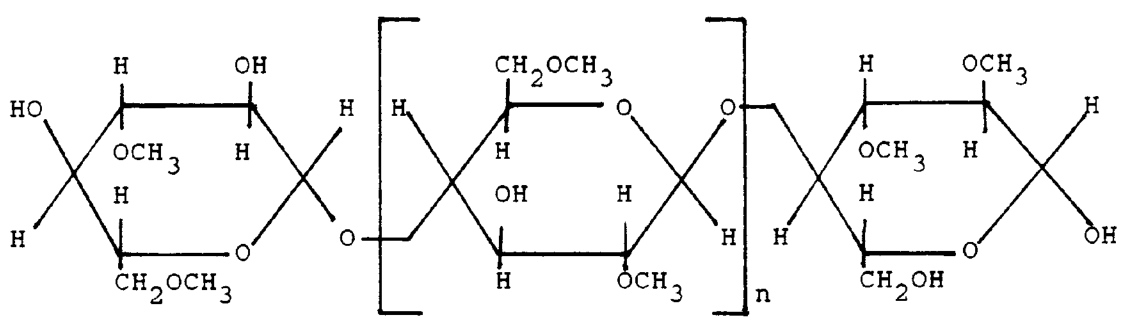

La quantité et la concentration de ce composé dans l'eau sont telles qu'on obtient une suspension stable, homogène et suffisamment fluide de l'ensemble pour pouvoir en former des gouttes. Cette concentration est par exemple de 3,5%.

Il est à noter que la molécule de méthyl cellulose est non-ionique (contrairement à celle de carboxy-méthyl cellulose utilisée dans le procédé selon DE-37 16 286 A1). De ce fait, elle ne peut pas être précipitée sous forme de sel insoluble dans des ions métalliques polyvalents.

On laisse tomber cette suspension à travers des trous ou tubes calibrés d'un diamètre de quelques dizièmes de millimètre à quelques millimètres dans un bain aqueux d'au moins un sel ou hydroxyde métallique ne réagissant pas avec les particules en question. La concentration de ce bain est telle que le composé se précipite aussitôt en contact avec le bain. Les gouttes ainsi formées se solidifient rapidement sous forme de sphères régulières et de dimensions uniformes. Les dimensions des sphères dépendent des dimensions des trous ou tubes à travers lesquels la suspension tombe dans le bain.

Dans ce contexte, référence est faite au brevet allemand 12 12 841, qui concerne la fabrication des sphères en oxyde d'uranium et/ou de thorium. On y part d'une solution aqueuse de sels de l'uranium et/ou de thorium; on ajoute à cette solution un composé à base d'hydrate de carbone et on laisse tomber cette solution dans un bain alcalin. Cependant, vu la nature des produits de départ, ce procédé n'est pas susceptible d'agglomérer les grains d'une poudre.

Sur la figure unique, on voit un appareil de laboratoire permettant de former des particules granulées à partir dudit mélange de la poudre en question avec une solution aqueuse d'un composé de méthyl cellulose. Ce mélange en passant par un tube d'injection 1 tombe sous forme de gouttes 2 dans un bain comportant une solution précipitante aqueuse de NaOH, KOH, $NaCO_3$ ou $Na_2SO_4$. Ce bain est thermostaté par un circuit 4 de caloporteur, comportant une pompe 5 et un thermocouple 6 pour assurer une température du bain d'environ 80°C. En tombant dans le bain, les gouttes 2 se solidifient et peuvent être extraites en bas du bain immédiatement après leur sédimentation. Cette extraction et le tranfert des granules vers une grille de séchage 7 sont assurés par une pompe 8 qui injecte de la solution précipitante dans un conduit 9 permettant d'entraîner les sphères. Cette même pompe peut servir également à recycler cette solution dans une colonne 10 de concentration de la solution pour conserver la concentration de la solution, l'eau distillée étant récupérée dans un récipient 11 à la sortie de la colonne 10.

Après avoir traversé la grille de séchage, les particules granulées ou sphères sont collectées dans un récipient 12.

Ces particules peuvent alors être lavées à l'eau et séchées dans l'air à une température entre 80 et 100°C.

S'il est souhaité de détruire le composé cellulosique, on peut calciner les particules à une température entre 450 et 500°C. En effectuant un traitement thermique à une température encore plus élevée, on obtient, selon la nature du matériau de la poudre de départ, un frittage ou une formation d'un produit céramique.

Ci-après nous indiquons quelques exemples d'application du procédé selon l'invention.

## Exemple 1

On disperse 25 g de $BaCO_3$ en poudre par agitation dans 25 ml d'une solution aqueuse 3,5% de METHOCEL 4AC de la société Dow Chemical. On ajoute successivement 50 ml de l'eau pour obtenir une certaine fluidité de la dispersion. Puis, on laisse tomber cette dispersion à travers un trou d'un millimètre de diamètre dans un bain contenant 250 ml d'une solution aqueuse de NaOH d'une concentration de 20%. Après formation, les sphères formées sont immédiatement extraites du bain, séchées à 90°C et puis calcinées dans un four à 500°C. On obtient ainsi un matériau de forme régulière (diamètre environ 5 mm) et mécaniquement résistant.

## Exemple 2

On part de 35 g d'une poudre de $Al(OH)_3$ dispersée dans 40 ml d'une solution aqueuse 3,5% de METHOCEL 4AC. On ajoute 25 ml d'eau.

La dispersion ainsi obtenue est fait tomber à travers un trou de 1 mm dans une solution de NaOH d'une concentration 20% et on obtient des sphères régulières d'un diamètre de 6 mm après un séchage à 90°C.

Un résultat similaire est obtenu en utilisant un bain de $Na_2CO_3$ dans l'eau (concentration 25%).

## Exemple 3

On part d'une poudre de ciment ordinaire dispersée dans l'eau et une solution aqueuse 3,5% de METHOCEL 4 AC. La composition de la pâte obtenue est la suivante:

| | |
|---|---|
| Ciment | = 62% |
| Solution de METHOCEL | = 10,2% |
| Eau | = 27,8% |

La dispersion est faite tomber à travers un trou ou un système de trous d'environ 1 mm de diamètre dans une solution de NaOH d'une concentration de 20%. Ob obtient des sphères d'un diamètre d'environ 7 mm qui, après une maturation à 60°C et 98% d'humidité relative, présentent une bonne résistance mécanique.

D'autres exemples d'application du procédé selon l'invention ressortent du tableau ci-après.

| Matériaux poudreux | Dispersion (pourcentage en poids) | | | Solution aqueuse du bain |
|---|---|---|---|---|
| | Matériau | METHOCEL 3,5% | Eau | |
| cendre de bois | 27,8 | 27,8 | 44,4 | NaOH 20% |
| $Fe_2O_3$ | 25,0 | 25,0 | 50,0 | NaOH 20% |
| Diatomite | 20,0 | 26,6 | 53,0 | $Na_2SO_4$ 20% |
| $CaCO_3$ | 24,4 | 36,6 | 39,0 | NaOH 20% |
| MgO | 46,8 | 31,3 | 21,9 | NaOH 20% $Na_2CO_3$ 20% |
| carbone | 35,5 | 30,0 | 34,5 | NaOH 20% |

Le procéde selon l'invention permet de fabriquer des particules granulées monodispersées et d'une forme sphérique très régulière de la dimension souhaitée. Le procédé est très économique, car la solution du bain de précipitation peut être recyclée à travers un étage simple de concentration. L'unique composé chimique consommé dans le procédé est la résine cellulosique. En outre, le procédé de l'agglomeration proprement dite se déroule à température ambiante ou peu élevée. Enfin, ce procédé peut s'appliquer à une grande variété de matériau poudreux et même à des boues. Les particules granulées obtenues peuvent être traitées, transportées et stockées sans problème, ce qui n'est pas le cas de la poudre respective.

Le procédé n'est pas limité aux exemples cités ci-dessus. On peut, au contraire, l'appliquer à d'autres matériaux tels que des engrais, des déchets radioactifs, toxiques et nocifs, des boues de filtrage.

Si la résistance mécanique des particules ainsi obtenues est insuffisante, cette résistance peut être améliorée en ajoutant de la poudre de ciment à la poudre qu'on veut compacter.

## Revendications

1. Procédé de formation de particules granulées à partir d'une poudre, qui est insoluble dans l'eau, les dimensions des particules granulées formées étant nettement plus grandes que celles des grains de la poudre, caractérisé par le fait que l'on mélange ladite poudre avec une solution aqueuse d'une cellulose choisie parmi méthyl cellulose, hydroxypropyle méthyl cellulose, hydroxybutyle méthyl cellulose étherique et qu'on fait ensuite tomber des gouttes de ce mélange dans un bain aqueux d'au moins un sel ou hydroxyde métallique ne réagissant pas avec lesdites particules.

2. Procéde selon la revendication 1, caractérisé par le fait que l'on ajoute du ciment à ladite solution avant de la faire tomber dans ledit bain.

3. Procédé selon l'une des revendications précédentes, caractérisé par le fait que le bain est chauffé à une température entre 50 et 150°C, de préférence à 80°C.

4. Procédé selon l'une des revendications précédentes, caractérisé par le fait que les particules formées sont lavées et puis calcinées à une température telle que ladite cellulose se décompose.

5. Procéde selon l'une des revendications précédentes, caractérisé par le fait que les particules formées sont frittées à une température dépassant 500°C.

6. Procédé selon l'une des revendications précédentes, caractérisé par le fait que l'hydroxyde métallique est choisi parmi NaOH et KOH.

7. Procédé selon l'une des revendications 1 à 5, caractérisé par le fait que le sel métallique est choisi parmi $Na_2CO_3$ et $Na_2SO_4$.

## Patentansprüche

1. Verfahren zur Herstellung von Granulaten ausgehend von einem wasserunlöslichen Pulver, wobei die gebildeten Granulate wesentlich größer sind als die Körner des Pulvers, dadurch gekennzeichnet, daß man dieses Pulver mit einer wässrigen Lösung einer Zellulose mischt, die aus Methylzellulose, Hydroxypropylmethylzellulose, ätherischer Hydroxybutylmethylzellulose ausgewählt wird und daß man anschließend Tropfen dieser Mischung in ein wässriges Bad mindestens eines Metallsalzes oder -hydroxids fallen läßt, das nicht mit diesen Granulaten reagiert.

2. Verfahren nach Anspruch 1, dadurch gekennzeichnet, daß man Zement zu dieser Lösung hinzufügt, ehe man sie in das Bad eintropfen läßt.

3. Verfahren nach einem der vorhergehenden Ansprüche, dadurch gekennzeichnet, daß das Bad auf eine Temperatur zwischen 50 und 150°C aufgeheizt wird, vorzugsweise auf 80°C.

4. Verfahren nach einem der vorhergehenden Ansprüche, dadurch gekennzeichnet, daß die gebildeten Granulate gewaschen und dann bei einer solchen Temperatur kalziniert werden, daß die Zellulose zerfällt.

5. Verfahren nach einem der vorhergehenden Ansprüche, dadurch gekennzeichnet, daß die gebildeten Granulate bei einer Temperatur oberhalb 500°C gesintert werden.

6. Verfahren nach einem der vorhergehenden Ansprüche, dadurch gekennzeichnet, daß das Metall-Hydroxid aus NaOH und KOH ausgewählt wird.

7. Verfahren nach einem der Ansprüche 1 bis 5, dadurch gekennzeichnet, daß das Metallsalz aus $Na_2CO_3$ und $Na_2SO_4$ ausgewählt wird.

## Claims

1. A process for producing granulated particles from a powder which is insoluble in water, the dimensions of the produced granulated particles being substantially larger than those of the powder grains, characterized in that the powder is mixed with an aqueous solution of a cellulosis chosen among methyl cellulosis, hydroxypropyl methyl cellulosis, etheric hydroxybutyl methyl cellulosis, and that then droplets of this mixture are made to fall into an aqueous bath of at least one metal salt or hydroxyde which does not react with said particles.

2. A process according to claim 1, characterized in that cement is added to said solution prior to making it fall into said bath.

3. A process according to one of the preceding claims, characterized in that the bath is heated up to a temperature between 50 and 150°C, preferably 80°C.

4. A process according to one of the preceding claims, characterized in that the produced particles are washed and then calcinated at a temperature such that said cellulosis decomposes.

5. A process according to one of the preceding claims, characterized in that the produced particles are sintered at a temperature exceeding 500°C.

6. A process according to one of the preceding claims, characterized in that the metal hydroxyde is chosen among NaOH and KOH.

7. A process according to one of claims 1 to 5, characterized in that the metal salt is chosen among $Na_2CO_3$ and $Na_2SO_4$.

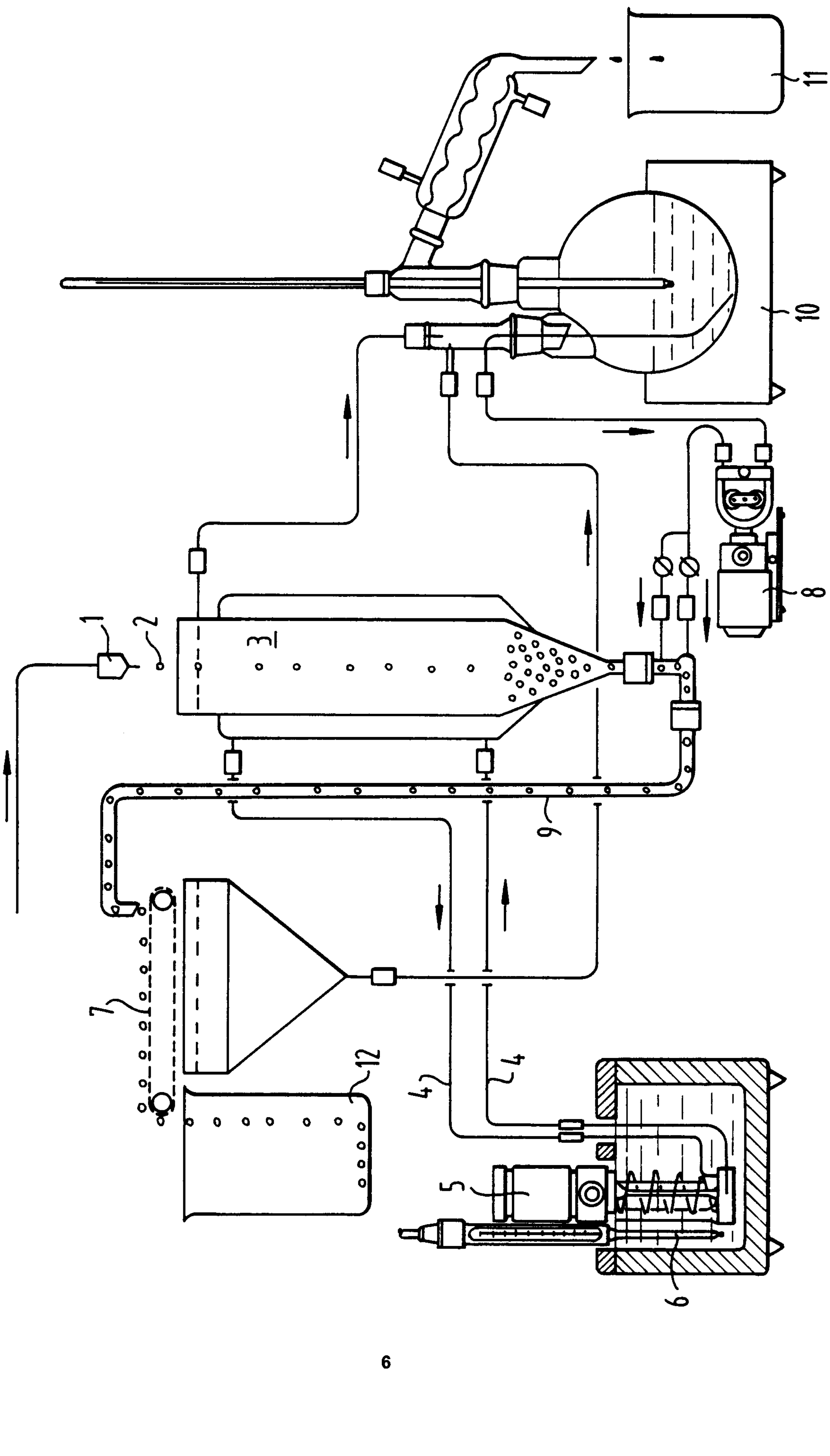
1
2
3
4
4
5
6
7
8
9
10
11
12